## Europäisches Patentamt
## European Patent Office
## Office européen des brevets

(19)

(11) Numéro de publication: **0 001 195**
**B1**

(12)

# FASCICULE DE BREVET EUROPEEN

(21) Numéro de dépôt: **78400087.9**

(51) Int. Cl.³: **F 16 K 31/06**

(22) Date de dépôt: **01.09.78**

(54) Electrovanne anti-retour

(30) Priorité: **09.09.77 FR 7727267**

(43) Date de publication de la demande:
**21.03.79 Bulletin 79/06**

(45) Mention de la délivrance du brevet:
**10.12.80 Bulletin 80/25**

(84) Etats contractants désignés:
**DE GB SE**

(56) Documents cités:
**FR - A - 1 472 397**
**FR - M - 70 998**

(73) Titulaire: **SOCIETE ANONYME D.B.A**
**98 boulevard Victor Hugo**
**F - 92115 Clichy (FR)**

(72) Inventeur: **Pressaco, Pierre**
**45 rue E Zola**
**93120 La Courneuve (FR)**

(74) Mandataire: **Brullé, Jean**
**Service Brevets Bendix 44, rue**
**François 1er F - 75008 Paris (FR)**

Courier Press, Leamington Spa, England.

Electrovanne anti-retour

L'invention se rapporte à une électrovanne anti-retour et notamment à une électrovanne susceptible d'être utilisée dans un circuit de commande hydraulique d'accessoires équipant un véhicule automobile tel que, par exemple, un circuit de commande de lave-glaces ou de lave-phares.

On connâit de nombreux types d'électrovannes de conception et de structure différentes. Cependant, la plupart des électrovannes connues remplissent une fonction identique qui est de contrôler l'ouverture et la fermeture d'un passage entre un orifice d'entrée et un orifice de sortie en réponse à la mise en oeuvre d'un dispositif électromagnétique.

"Par exemple, la deuxième addition N° 70 998 au brevet français N° 1 142 760, déposée au nom de la Régie Nationale des Usines Renault décrit un tel type d'électrovanne dont l'application essentielle est de former un dispositif de mise à l'échappement d'une source de pression. Dans sa structure essentielle, cette électrovanne comprend un boîtier pourvu d'un orifice d'entrée et d'un orifice de sortie qui communiquent par un passage dans lequel sont disposés des moyens formant clapet susceptibles de se déplacer à l'intérieur du boîtier en réponse à la mise en oeuvre d'un dispositif électromagnétique, ainsi que des moyens formant piston partageant ledit passage et comportant un second passage ou orifice conformé en siège de vanne susceptible de coopérer avec lesdits moyens formant clapet".

Dans certaines utilisations particulières telles que, par exemple, la commande d'un lave-glaces ou d'un lave-phares sur un véhicule automobile, il est absolument indispensable d'adjoindre à l'électrovanne, outre une pompe d'alimentation, un dispositif antiretour permettant d'empêcher la circulation du liquide de lavage des gicleurs vers la pompe. Habituellement, le dispositif antiretour est extreme à l'électrovanne, ce qui a pour principale conséquence d'augmenter la complexité du circuit ainsi que son prix de revient tout en diminuant la fiabilité.

Il est donc souhaitable de pouvoir disposer d'un électrovanne remplissant également la fonction de dispositif antiretour lorsqu'elle est en position ouverte. Il est également souhaitable qu'une telle électrovanne soit de conception particulièrement simple afin de ne pas en augmenter exagérément le prix et de limiter les risques de défaillance inhérants à un dispositif complexe.

Dans ce but, l'invention propose une électrovanne comprenant un boîtier pourvu d'au moins un orifice d'entrée et d'au moins un orifice de sortie qui communiquent par un passage dans lequel sont disposés des moyens formant clapet susceptibles de se déplacer à l'intérieur du boîtier en réponse à la mise en oeuvre d'un dispositif électromagnétique pour commander l'ouverture ou la fermeture dudit passage et comportant en outre des moyens formant piston définissant dans ledit passage une chambre d'entrée qui communique avec l'orifice d'entrée et une chambre de sortie qui communique avec l'orifice de sortie, lesdites chambres d'entrée et de sortie communiquant par un second passage ménagé dans les moyens formant piston et par un siège de valve définit dans le second passage, caracterisé en ce que ledit siège est sollicité normalement en engagement étanche avec les moyens formant clapet par de premiers moyens élastiques quelle que soit la position occupée par les moyens formant clapet et que ces derniers sont susceptibles d'occuper une première position dans laquelle ils sollicitent les moyens formant piston à l'encontre des moyens élastiques contre des moyens de butée disposés dans le boîtier, de façon à empêcher toute communication entre l'orifice d'entrée et l'orifice de sortie, et une seconde position dans laquelle les moyens formant piston sont sensibles à la différence des pressions régnant dans lesdites chambres d'entrée et de sortie pour autoriser la communication de l'orifice d'entrée vers l'orifice de sortie et pour interdire la communication dans le sens inverse.

Selon un mode de réalisation préferé de l'invention, les moyens formant clapet sont sensibles à la pression régnant dans l'orifice d'entrée pour occuper ladite première position en l'absence d'une mise en oeuvre du dispositif électromagnétique.

Selon encore un autre mode de réalisation préferé de l'invention, le dispositif électromagnétique comprend un noyau fixe disposé à l'intérieur d'un bobinage, et la seconde position des moyens formant clapet est définie par la venue de ces derniers en engagement avec le noyau fixe.

Selon encore un autre mode de réalisation préferé de l'invention, l'électrovanne comprend un second orifice de sortie susceptible de communiquer avec l'orifice d'entrée par un troisième passage, les moyens formant piston comprenant de seconds moyens formant clapet susceptibles d'engager de façon étanche un second siège de valve formé dans le boîtier lorsque les premiers moyens formant clapet occupent leur seconde position, pour interdire la communication entre l'orifice d'entrée et le second orifice de sortie, cette dernière étant autorisée lorsque les premiers moyens formant clapet occupent leur première position.

Une électrovanne répondant à ces dernières caractéristiques peut être utilisée par exemple pour commander sélectivement un dispositif de lavage du pare-brise et un dispositif de lavage de la lunette arrière d'un véhicule automobile.

On décrira maintenant un mode de réalisation particulier de l'invention en se référant aux dessins annexés dans lesquels:

— la figure 1 est une vue en coupe longitudinale d'une électrovanne comprenant un orifice de sortie unique et réalisée conformément aux enseignements de la présente invention;

— la figure 2 est une vue en coupe longitudinale d'une électrovanne comprenant deux orifices de sortie et réalisée conformément aux enseignements de l'invention; et

— la figure 3 représente schématiquement un circuit de lavage du pare-brise, de la lunette arrière, et des phares d'un véhicule automobile utilisant trois électrovannes du type de l'électrovanne représentée en coupe sur la figure 1.

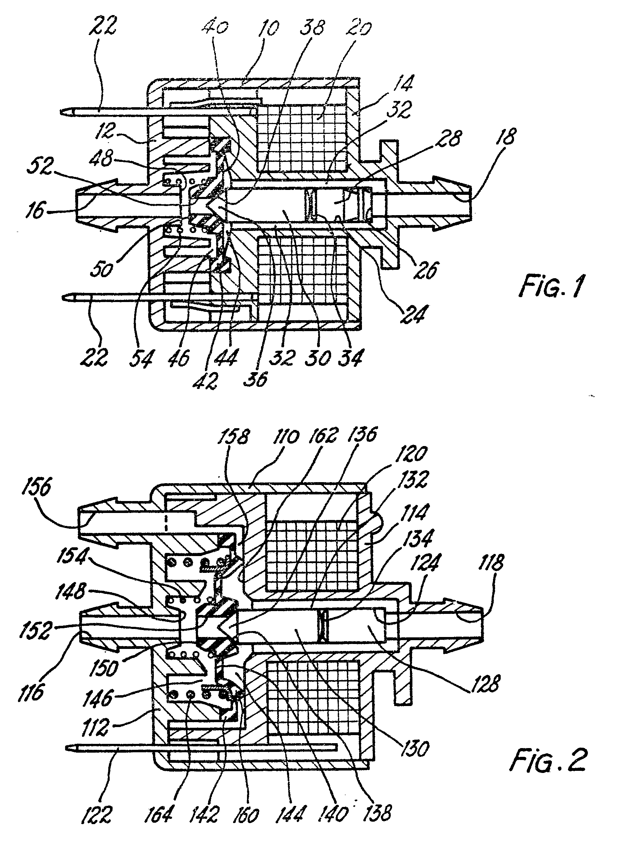

L'électrovanne représentée sur la figure 1 comprend un boîtier 10 réalisé de préférence en matière plastique moulée, et comprenant deux parties 12 et 14 assemblées par tout moyen approprié tel que, par exemple, par emboîtement, par collage, ou par soudure. La partie 12 du boîtier 10 présente la forme d'une coupelle de structure sensiblement cylindrique dont le fond est muni en son centre d'un embout dans lequel est formé un orifice de sortie 16. La partie 14 constitue un bouchon qui vient fermer l'extrémité ouverte de la partie en forme de coupelle 12 du boîtier 10, et elle est également munie en son centre d'une embout percé d'un orifice d'entrée 18. Les orifices d'entrée 18 et de sortie 16 sont donc alignés le long de l'axe défini par le boîtier 10 et s'ouvrent sur les faces opposées de ce dernier.

La partie 14 du boîtier 10 s'étend à l'intérieur de la partie 12 pour recevoir un bobinage 20 susceptible d'être connecté à un circuit électrique d'alimentation au moyen de bornes 22 qui traversent la partie 12 du boîtier 10 pour déboucher à l'extérieur de ce dernier. Il va de soit que si le boîtier 10 n'est pas réalisé en matériau électriquement isolant tel qu'un matériau plastique, il est nécessaire d'isoler électriquement le bobinage 20 et les bornes 22 du boîtier 10 au moyen de dispositifs d'isolation d'un type quelconque connu des spécialistes de la technique. Le bobinage 20 est enroulé selon une configuration annulaire et il entoure un alésage 24 formé dans la partie 14 du boîtier 10 entre l'orifice d'entrée 18 et l'extrémité de la partie 14 faisant face à l'orifice de sortie 16. De préférence, les axes de l'alésage 24, du bobinage 20, des orifices d'entrée et de sortie 18 et 16 et du boîtier 10 sont confondus. Le diamètre de l'alésage 24 est supérieur au diamètre de l'orifice d'entrée 18 pour définir un épaulement 26 contre lequel est amené en butée noyau fixe 28 emmanché à force dans l'alésage 24. Le noyau fixe 28 se trouve ainsi décalé axialement du côté de l'orifice d'entrée 18 par rapport au bobinage 20.

Des moyens formant clapet constitués par une armature mobile 30 sont également reçus de façon coulissante dans l'alésage 24. Des rainures axiales 32 sont ménagées par ailleurs dans la paroi de l'alésage 24 de façon à définir entre l'orifice d'entrée 18 et l'orifice de sortie 16 du boîtier 10 un passage dont l'ouverture est contrôlée comme on le verra par la suite par le déplacement de l'armature mobile 30. L'armature mobile 30 est susceptible de venir engager le noyau fixe 28 par une face bombée 34, de telle sorte que l'armature 30 soit sensible à la pression régnant au niveau de l'orifice d'entrée 18, même lorsqu'elle est en engagement avec le noyau fixe 28. L'extrémité opposée 36 de l'armature 30 est en forme de cône et constitue un clapet susceptible de venir engager un siège de valve annulaire 38 formé autour d'un passage 52 traversant une paroi 40. La paroi 40 est réalisée en matériau souple tel que, par exemple, en matériau élastomère, et sa périphérie externe est munie d'un bourelet 42 reçu de façon étanche entre les parties 12 et 14 du boîtier 10. La paroi 40 définit ainsi une chambre d'entrée 44 qui communique avec l'orifice d'entrée 18 par les rainures 32, et une chambre de sortie 46 qui communique avec l'orifice de sortie 16. Un espace de largeur variable est défini entre le bord annulaire 48 du boîtier 10 entourant l'extrémité de l'orifice 16 faisant face à l'armature 30 et le bord annulaire 50 de la paroi 40 faisant face au bord 48 pour contrôler la communication entre l'orifice 16 et la chambre 46. Le passage 52 formé dans la paroi 40 met en communication la chambre d'entrée 44 avec l'orifice de sortie 16, et ses extrémités faisant face à l'armature 30 et à l'orifice 16 définissent respectivement le siège de valve 38 et le bord 50. Le passage 52 est également axialement aligné avec l'armature 30 et avec l'orifice de sortie 16. Enfin, un ressort hélicoïdal 54 est disposé dans la chambre de sortie 46 au voisinage du passage 52 pour solliciter le siège de valve 38 en engagement avec l'extrémité cônique 36 de l'armature 30, quelle que soit la position occupée par cette dernière.

L'électrovanne qui vient d'être décrite en se référant à la figure 1 fonctionne de la façon suivante:

On supposera tout d'abord que l'orifice d'entrée 18 communique avec un circuit d'alimentation comprenant une source de fluide sous pression telle qu'une pompe hydraulique, que l'orifice de sortie 16 communique avec un récepteur hydraulique tel que, par exemple, un gicleur de lave-glaces, et que les bornes 22 sont reliées à un circuit électrique de commande. Lorsqu'aucune pression n'est communiquée à l'orifice d'entrée 18 et lorsque le bobinage 20 n'est pas sous tension, les différents éléments constituant l'électrovanne occupent les positions représentées sur la figure 1.

Lors de la mise sous pression du circuit résultant par exemple de la mise en oeuvre de la pompe hydraulique, la pression régnant au niveau de l'orifice d'entrée 18 agit à la fois sur la face bombée 34 de l'armature 30 et sur la face de la paroi 40 disposée du côté de la chambre d'entrée 44 pour solliciter l'armature 30 et la paroi 40 vers la gauche en considérant la figure 1 à l'encontre de la force exercée par le ressort 54. Il en résulte la venue en butée de la surface 50 formée sur la paroi 40 contre la surface 48 formée sur le boîtier. La chambre de sortie 46 est ainsi isolée de façon étanche de l'orifice de sortie 16 et tout autre déplacement vers la gauche de la partie interne de la paroi 40 ainsi que de l'armature 30 est empêché. L'armature 30 occupe ainsi une première position, appelée position de fermeture, pour laquelle son extrémité cônique 36 engage de façon étanche le siège de valve 38 défini sur la paroi 40 sous l'action de la pression agissant sur l'extrémité bombée 34, de telle sorte que toute communication entre l'orifice d'entrée 18 et l'orifice de sortie 16 est interdite.

Lorsque le circuit électrique connecté aux bornes 22 est fermé, le bobinage 20 se trouve mis sous tension, de telle sorte que l'armature 30 est sollicitée vers la droite en considérant la figure 1. Cependant, conformément à un mode de réalisation préférentiel de l'invention, le bobinage 20 est constitué par un nombre limité de spires calculé de telle sorte que la force exercée par le bobinage 20 sur l'armature 30 lorsque cette dernière occupe sa position de fermeture, à laquelle s'ajoute la force exercée par le ressort 54, n'est pas suffisante pour contrebalancer la force s'exerçant sur le diaphragme et le clapet, résultant de la mise sous pression du circuit d'alimentation qui communique avec l'orifice d'entrée 18 de l'électrovanne. Par conséquent, la mise sous tension du bobinage 20 est sans effet sur l'électrovanne qui reste fermée jusqu'à ce que la pression communiquée à l'orifice d'entrée redescende à un niveau suffisamment bas pour permettre au ressort 54 de ramener la paroi 40 et l'armature mobile 30 dans leur positions de repos représentées sur la figure 1. Dans la pratique, ce résultat est obtenu lorsque la pompe hydraulique qui communique avec l'orifice d'entrée 18 n'est plus sous tension.

Si l'on suppose maintenant que le circuit électrique connecté aux bornes 22 est fermé avant la mise sous tension de la pompe hydraulique communicant avec l'orifice d'entrée 18, ou simultanément à cette mise sous tension, le fonctionnement de l'électrovanne est le suivant.

Au moment où le bobinage 20 est mis sous tension, la paroi 40 ainsi que l'armature mobile 30 occupent les positions représentées sur la figure 1 sous l'action du ressort 54. La force exercée par le bobinage 20 sur l'armature 30, à laquelle s'ajoute la force exercée initialement par le ressort 54, est alors suffisante pour contrebalancer la force s'exerçant sur le diaphragme et le clapet résultant de la mise sous pression du circuit d'alimentation connecté à l'orifice d'entrée 18 de l'électrovanne, de telle sorte que l'armature 30 reste dans la position représentée sur la figure 1. La surface 50 formée sur la paroi 40 se trouve alors dégagée de la surface 48 formée sur le boîtier, de telle sorte que le siège de valve 38 défini sur la paroi 40 peut se déplacer en éloignement de l'extrémité cônique 36 de l'armature 30 sous l'action de la pression admise dans la chambre d'entrée 44 par les rainures 32 ménagées dans la paroi de l'alésage 24. La communication de l'orifice d'entrée 18 vers l'orifice de sortie 16 est donc autorisée par les rainures 32, la chambre d'entrée 44, la valve 36, 38 et le passage 52.

Lorsque la pompe hydraulique qui communique avec l'orifice d'entrée 18 cesse de fonctionner, la pression régnant au niveau de l'orifice d'entrée 18 devient inférieure à la pression régnant au niveau de l'orifice de sortie 16. Conformément à l'invention, la communication de fluide hydraulique de l'orifice de sortie 16 vers l'orifice d'entrée 18 qui tend alors à s'instaurer est empêchée par la paroi 40 qui est sensible à la différence des pressions régnant dans les chambres d'entrée 44 et de sortie 46, qui communiquent respectivement avec les orifices d'entrée et de sortie 16, pour venir plaquer le siège de valve 38 défini sur la paroi 40 contre l'extrémité cônique 36 de l'armature 30 lorsque la pression régnant dans la chambre de sortie 46, augmentée de la pression exercée par le ressort 54, devient supérieure à la pression régnant dans la chambre d'entrée 44. La pression à l'orifice de sortie 16 est ainsi maintenue à un niveau suffisamment élevé pour permettre une réponse très rapide de l'électrovanne lorsque la pompe hydraulique qui communique avec l'orifice d'entrée 18 est à nouveau mise en oeuvre.

On remarquera par ailleurs que le fonctionnement qui vient d'être décrit correspond à une électrovanne équipée d'un bobinage 20 extrêment simplifié dont la force de rappel exercée sur l'armature mobile 30 est suffisante pour maintenir cette dernière dans la position représentée sur la figure 1 à l'encontre de la force résultant de la mise sous pression du circuit d'alimentation, mais insuffisante pour ramener l'armature 30 dans cette position lorsqu'elle a été précédemment sollicitée vers la gauche par une mise sous pression du circuit d'alimentation. Ce résultat est permis grâce à l'adjonction du ressort 54 qui sollicite l'armature mobile 30 vers sa position de repos par l'intermédiaire de la paroi 40. Il conduit à une grande simplification de la partie électrique de l'électrovanne qui a pour principale conséquence une réduction sensible de son prix de revient. Il va de soi cependant qu'une telle électrovanne pourrait également être équipée d'un bobinage de plus grandes dimensions sans sortir du cadre de l'invention. Son fonctionnement différerait alors essentiellement de celui qui vient d'être décrit par le fait qu'une excitation du bobinage intervenant à la suite d'une mise sous pression du circuit d'alimentation assurerait le retour de l'armature mobile 30 et de la paroi 40 dans la position représentée sur la figure 1, autorisant ainsi la communication du fluide hydraulique de l'orifice d'entrée 18 vers l'orifice de sortie 16, tout en interdisant la communication inverse.

On décrira maintenant en se référant à la figure 2 une électrovanne différent principalement de l'électrovanne représentée sur la figure 1 par le fait qu'elle comporte deux orifices de sortie. Dans le but de faciliter la compréhension de l'invention, les éléments de l'électrovanne représentée sur la figure 2 remplissant des fonctions identiques aux éléments de l'électrovanne représentée sur la figure 1 ont été désignés par les mêmes numéros de référence augmentés de 100.

Comme dans le cas de la figure 1, l'électrovanne, représentée sur la figure 2, comprend un boîtier 110 en deux parties 112 et 114, de configuration sensiblement cylindrique. Les centres des faces opposées du boîtier 110 sont également munis d'embouts percés d'un orifice d'entrée 118 et d'un orifice de sortie opposé 116. La partie 114 du boîtier porte également un bobinage annulaire 120 susceptible d'être relié par deux bornes 122, dont l'une seulement est représentée sur la figure 2, à un circuit électrique de commande. La partie 114 du boîtier est également percée d'un alésage 124 qui s'étend entre l'orifice d'entrée 118 et l'orifice de sortie 116 et reçoit à force un noyau fixe 128 et, librement, une armature mobile 130. Comme dans le mode de réalisation précédent, l'extrémité 134 de l'armature 130 disposée en vis-à-vis du noyau fixe 128 est bombée et son extrémité opposée 136 est cônique et susceptible d'engager de façon étanche un siège de valve 138 défini à l'extrémité d'un passage 152 formé dans une paroi en matériau souple 140. Le bord périphérique externe de la paroi 140 est muni d'un bourrelet 142 immobilisé de façon étanche entre les parties 112 et 114 du boîtier, de façon à définir de part et d'autre de la paroi 140 une chambre d'entrée 144 qui communique avec l'orifice d'entrée 118 par des rainures 132 formées dans la paroi de l'alésage 124, et une chambre de sortie 146 qui communique avec l'orifice de sortie 116 par un espace annulaire défini entre les bords 148 et 150 des extrémités en vis-à-vis de l'orifice de sortie 116 et du passage 152 ménagés respectivement dans le boîtier 110 et dans la paroi 140.

Comme dans le mode de réalisation précédent un ressort 154 est disposé entre la partie 112 du boîtier et la paroi 140 au voisinage du passage 152 pour solliciter simultanément le siège de valve 138 en engagement étanche avec l'extrémité 136 de l'armature 130 et la surface 150 en éloignement de la surface 148.

Le mode de réalisation représenté sur la figure 2 diffère essentiellement du mode de réalisation représenté sur la figure 1 en ce que le boîtier 110 comporte du côté de l'orifice de sortie 116 un embout dans lequel est formé un second orifice de sortie 156 qui débouche dans une seconde chambre de sortie annulaire 158 séparée de la chambre d'entrée 144 par un bourrelet annulaire 160 formé sur la paroi 140 entre le bourrelet périphérique 142 et le siège de valve 138 et définissant un clapet susceptible de venir engager un siège de valve défini sur le boîtier 110 et constitué par une surface plane 162. Un ressort 164, disposé dans la chambre de sortie 146, sollicite le bourrelet 160 en engagement étanche avec la surface 162 de façon à isoler normalement la chambre d'entrée 144 de la seconde chambre de sortie 158. On remarquera que la souplesse de la paroi 140 permet au bourrelet 160 et au siège de valve 138 de se déplacer axialement l'un par rapport à l'autre et par rapport au bourrelet périphérique 152. Par ailleurs, le ressort 164 est radialement décalé par rapport au ressort 154 de telle sorte que le ressort 164 agit sur la paroi 140 sensiblement au niveau du bourrelet 160, tandis que le ressort 154 agit sur la paroi 140 sensiblement au niveau du siège de valve 138. En outre, la force exercée par le ressort 164 est sensiblement supérieure à la force exercée par le ressort 154.

L'électrovanne qui vient d'être décrite en se référant à la figure 2 fonctionne de la façon suivante:

On supposera tout d'abord que l'orifice d'entrée 118 communique avec un circuit d'alimentation comprenant une source de fluide sous pression telle que, par exemple, une pompe hydraulique, et que les orifices de sortie 116 et 156 communiquent respectivement avec deux dispositifs récepteurs tels que, par exemple, des dispositifs de lavage du pare-bris et de la lunette arrière d'un véhicule automobile. On supposera également qu'un circuit électrique de commande est connecté aux bornes 122 du bobinage 120.

L'électrovanne est représentée sur la figure 2 dans la position qu'elle occupe lorsque le circuit d'alimentation du bobinage 120 est ouvert et lorsque le circuit hydraulique dans lequel elles est montée n'est pas sous pression.

Lors de la mise sous pression du circuit hydraulique ayant pour conséquence une augmentation de la pression au niveau de l'orifice d'entrée 118, la pression agissant sur la face bombée 134 de l'armature 130 et sur la face de la paroi 140 disposée du côté de la chambre d'entrée 144 sollicite l'armature 130 et la partie interne de la paroi 140 vers la gauche en considérant la figure 2. Au cours de ce mouvement et comme dans le mode de réalisation précédent, la surface 150 formée sur la paroi 140 vient en engagement étanche avec la surface 148 formée sur le boîtier 110 de façon à isoler l'orifice de sortie 116 de la chambre de sortie 146. Parallèlement, l'extrémité 136 de l'armature 130 engage de façon étanche le siège de valve 138 sous l'action de la pression agissant sur la face bombée 134 de telle sorte que la communication entre l'orifice d'entrée 118 et l'orifice de sortie 116 reste interrompue. La structure de la paroi 140 est telle que, lorsque la surface 150 engage la surface 148, le bourrelet 160 se trouve dégagé de la surface 162 du boîtier à l'encontre de la force exercée par le ressort 164. Il en résulte que la communication entre l'orifice d'entrée 118 et le second orifice de sortie 156 est autorisée tant que la pression régnant au niveau de l'orifice d'entrée 118 reste suffisante pour maintenir la paroi 140 dans cette position.

Lors de la fermeture du circuit connecté aux bornes 122, le bobinage 120 est mis sous tension, ce qui a pour conséquence de solliciter l'armature 130 vers la droite en considérant la figure 2. Cependant, comme dans le mode de réalisation précédent, le nombre de spires constituant le bobinage 120 est de préférence tel que la force que ce dernier exerce sur l'armature 130 est insuffisante pour ramener l'armature 130 dans la position représentée sur la figure 2. La communication entre l'orifice d'entrée 118 et l'orifice de sortie 116 reste donc interrompue.

Lorsque la mise sous pression du circuit d'alimentation intervient après l'excitation du bobinage 120 ou simultanément à celle-ci, la force exercée par le bobinage 120 est cependant suffisante pour maintenir l'armature 130 dans la position représentée sur la figure 2. La communication entre l'orifice d'entrée 118 et l'orifice de sortie 116 est alors permise, tandis que la communication inverse est empêchée par la paroi 140 comme dans le mode de réalisation décrit en se référant à la figure 1. Parallèlement, le bourrelet annulaire 160 est maintenu en contact étanche avec la surface plane 162 par le ressort 164 et par la pression de fluide régnant dans la chambre de sortie 146 par suite de l'ouverture de la valve 136, 138 de telle sorte que la communication entre l'orifice d'entrée 118 et l'orifice de sortie 156 est interrompue.

Le fluide sous pression admis à l'orifice d'entrée 118 est ainsi communiqué sélectivement à l'orifice de sortie 156 ou à l'orifice de sortie 116 selon que le bobinage 120 est excité après ou avant la mise sous pression de l'orifice d'entrée 118. Comme dans le mode de réalisation décrit en se référant à la figure 1, la paroi 140 joue le rôle d'un clapet antiretour entre les orifices d'entrée 118 et de sortie 116.

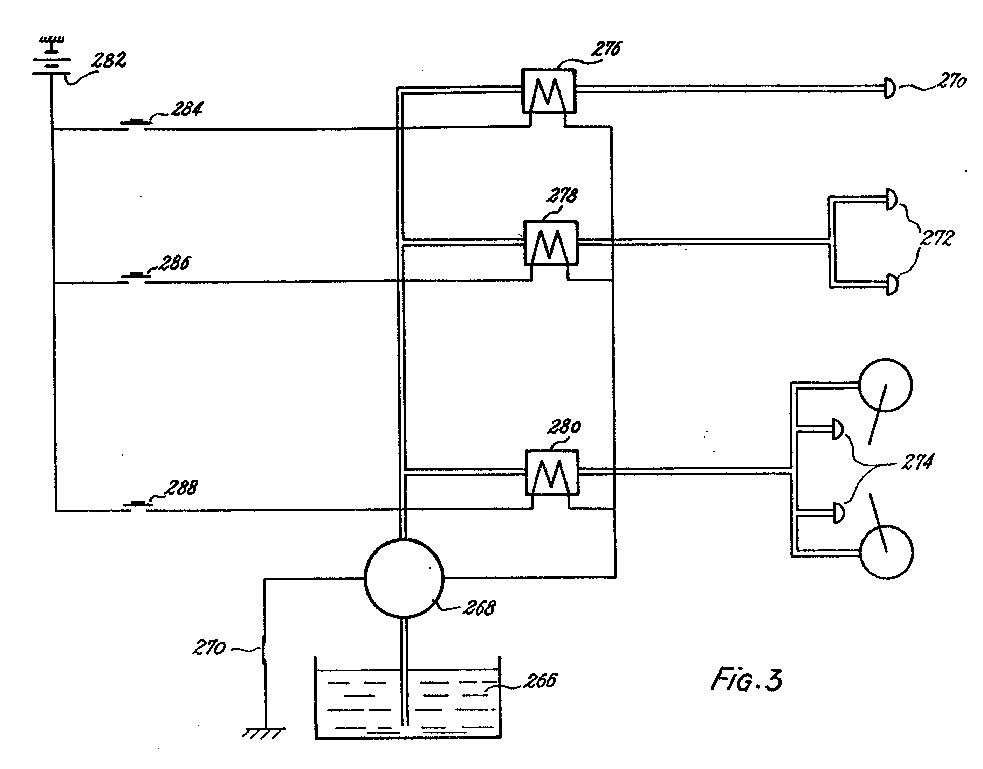

Sur la figure 3, on a représenté schématiquement à titre d'exemple, une application particulière de l'invention à un circuit de commande de lave-phares, de lave-pare-brise, et de lave-lunette arrière équipant un véhicule automobile.

Ce circuit est constitué principalement d'une partie hydraulique comprenant un réservoir 266, une pompe 268, et les gicleurs 270, 272, et 274 respectivement de dispositifs de lavage de la lunette arrière, du pare-brise, et des phares d'un véhicule automobile. La pompe 268 communique indépendamment avec les gicleurs 270, 272 et 274 par l'intermediaire de trois électrovannes 276, 278 et 280 qui peuvent être toutes les trois identiques et réalisées conformément au mode de réalisation décrit en se référant à la figure 1.

Le dispositif décrit en se référant à la figure 3 comprend en outre un circuit électrique d'alimentation de la pompe 168 et des bobinages des électrovannes 276, 278 et 280 qui se compose principalement d'une source de tension 282 alimentant en parallèle et au moyen d'interrupteurs séparés 284, 286 et 288 les bobinages des électrovannes 276, 278 et 280, le moteur électrique de la pompe 268 étant lui-même monté en série avec ces derniers, ainsi qu'un interrupteur général 270.

Le dispositif qui vient d'être décrit en se référant à la figure 3 fonctionne de la façon suivante:

Lorsque l'interrupteur 270 est fermé comme le montre la figure 3, la fermeture de l'un quelconque des interrupteurs 284, 286 ou 288 provoque la mise sous tension simultanée du bobinage de l'électrovanne correspondante ainsi que du moteur électrique de la pompe 268. Il en résulte d'une part que du fluide hydraulique sous pression est communiqué à l'orifice d'entrée 18 de l'électrovanne et que l'armature 30 de celle-ci est maintenue dans la position représentée sur la figure 1. Le passage de fluide hydraulique de l'orifice d'entrée 18 vers l'orifice de sortie 16 est donc autorisé de telle sorte que le ou les gicleurs correspondants sont alimentés en fluide hydraulique. Lorsque l'interrupteur 284, 286 ou 288 est à nouveau ouvert, il en résulte l'arrêt de la pompe 268 et la désexcitation du bobinage 20 ayant pour double conséquence une baisse de pression au niveau de l'orifice d'entrée 18 et une liberté de mouvement de l'armature 30. La paroi 40, faisant effet de clapet antiretour, vient alors engager de façon étanche l'extrémité 36 de l'armature 30 et permet ainsi de maintenir une certaine pression dans la canalisation joignant l'orifice de sortie 16 et le ou les gicleurs correspondants. On comprendra que cette caractéristique permet de diminuer sensiblement le temps de réponse par rapport à un dispositif du même type dans lequel on utiliserait des électrovannes de type classique.

l'invention n'est pas limitée au mode de réalisation qui vient d'être décrit à titre d'exemple. En particulier, la paroi souple 40 peut être remplacée par un piston coulissant ou par tout autre dispositif équivalent. De la même façon, la face bombée 34 de l'armature mobile 30 peut être d'une forme différente à condition que la coopération des deux faces en vis-à-vis du noyau fixe 28 et de l'armature mobile 30 permette à cette dernière de se déplacer vers la gauche en considérant la figure 1 en réponse à une augmentation de la pression régnant au niveau de l'orifice d'entrée 18. Enfin, la disposition particulière des orifices d'entrée et de sortie décrite en se référant aux figures 1 et 2 n'est pas limitative et ne constitue qu'un mode de réalisation particulier de l'invention.

**Revendications**

1. Electrovanne comprenant un boîtier (10) pourvu d'au moins un orifice d'entrée (18) et d'au moins un orifice de sortie (16) qui communiquent par un passage dans lequel sont disposés des moyens formant clapet (30) susceptibles de se déplacer à l'intérieur du boîtier (10) en réponse à la mise en oeuvre d'un dispositif électromagnétique (20, 28) pour commander l'ouverture ou la fermeture dudit passage et comportant en outre des moyens formant piston (40) définissant dans ledit passage une chambre d'entrée (44) qui communique avec l'orifice d'entrée (18) et une chambre de sortie (46) qui communique avec l'orifice de sortie (16), lesdites chambres d'entrée et de sortie communiquant par un second passage (52) ménagé dans les moyens formant piston (40) et par un siège de valve (38) défini dans le second passage (52), caractérisé en ce ledit siège est sollicité normalement en engagement étanche avec les moyens formant clapet (30) par de premiers moyens élastiques (54) quelle que soit la position occupée par les moyens formant clapet (30) et que ces derniers sont susceptibles d'occuper une première position dans laquelle ils sollicitent les moyens formant piston (40) à l'encontre des moyens élastiques (54) contre des moyens de butée (48) disposés dans le boîtier (10) de façon à empêcher toute communication entre l'orifice d'entrée (18) et l'orifice de sortie (16), et une seconde position dans laquelle les moyens formant piston (40) sont sensibles à la différence des pressions régnant dans lesdites chambres d'entrée (44) et de sortie (46) pour autoriser la communication de l'orifice d'entrée (18) vers l'orifice de sortie (16) et pour interdire la communication dans le sens inverse.

2. Electrovanne selon la revendication 1, caractérisée en ce que les moyens formant clapet (30) sont sensibles à la pression régnant dans l'orifice d'entrée (18) pour occuper ladite première position en l'absence d'une mise en oeuvre du dispositif électromagnétique (20, 28)

3. Electrovanne selon l'une quelconque des revendications 1 ou 2, le dispositif électromagnétique comprenant un noyau fixe (28) disposé à l'intérieur d'un bobinage (20), caractérisée en ce que la second position des moyens formant clapet (30) est définie par la venue de ces derniers en engagement avec le noyau fixe (28).

4. Electrovanne selon la revendication 3, caractérisée en ce que les moyens formant clapet (30) sont constitués par une armature sensiblement cylindrique, mobile axialement entre lesdites première et seconde positions à l'intérieur d'un alésage (24) ménagé dans le boîtier (10), le noyau fixe (28) étant également sensiblement cylindrique et disposé dans ledit alésage (24) entre l'orifice d'entree (18) et l'armature mobile (30), au moins une rainure (32) étant formée dans la paroi de l'alésage (24) pour mettre en communication l'orifice d'entrée (18) et la chambre d'entrée (18).

5. Electrovanne selon la revendication 4, caractérisée en ce que l'armature (30) et le noyau (28) sont sensiblement de même diamètre, l'une au moins (34) de leurs extrémités en contact étant bombée de façon à définir sur l'armature (30) une surface sensible à la pression régnant dans l'orifice d'entrée (18).

6. Electrovanne selon l'une quelconque des revendications 3 à 5, caractérisée en ce que la mise sous tension du bobinage (20) génère une première ou une second force électromagnétique selon que les moyens formant clapet (30) occupent la première ou la seconde position, la première force électromagnétique augmentée de la force exercée par les moyens élastiques (54) étant inférieure à la force résultant de la pression régnant dans l'orifice d'entrée (18), s'exerçant sur le diaphragme et le clapet, alors que la seconde force electromagnetique augmentée de la force exercée par les moyens élastiques (54) est initialement supérieure à la force résultant de la pression régnant dans l'orifice d'entrée (18) s'exerçant sur le diaphragme et le clapet.

7. Electrovanne selon l'une quelconque des revendications précédentes, caractérisée en ce que l'orifice de sortie (16) est sensiblement aligné avec le second passage (52) et en ce que les bords en vis-à-vis du boîtier et des moyens formant piston (40) entourant respectivement l'orifice de sortie (16) et le second passage (52) définissent un espace de largeur variable contrôlant la communication entre l'orifice de sortie (16) et la chambre de sortie (46), ledit espace étant formé pour isoler de façon étanche l'orifice de sortie de la chambre de sortie lorsque les moyens formant clapet occupent leur première position.

8. Electrovanne selon l'une quelconque des revendications précédentes, caractérisée en ce qu'elle comprend un second orifice de sortie (156) susceptible de communiquer avec l'orifice d'entrée (118) par un troisième passage (158), les moyens formant piston (140) comprenant de seconds moyens formant clapet (160) susceptibles d'engager de façon étanche un second siège de valve (162) formé dans le boîtier (110) lorsque les premiers moyens formant clapet (130) occupent leur second position, pour interdire la communication entre l'orifice d'entrée (118) et le second orifice de sortie (158), cette dernière étant autorisée lorsque les premiers moyens formant clapet (130) occupent leur première position.

9. Electrovanne selon la revendication 8, caractérisée en ce que les seconds moyens formant clapet sont constitués par une partie annulaire (160) formée sur les moyens formant piston (140) et susceptible d'engager de façon étanche une partie correspondante (162) formée dans le boîtier (110) pour délimiter le bord périphérique externe de la chambre d'entrée (144) et le bord périphérique interne d'une seconde chambre de sortie annulaire (158) entourant les moyens formant piston (140) et communiquant avec le second orifice de sortie.

10. Electrovanne selon l'une quelconque des revendications précédentes, caractérisée en ce que les moyens formant piston comprennent une paroi en matériau souple (40) dont le bord périphérique externe (42) est associé de façon étanche audit boîtier (10).

11. Electrovanne selon la revendication 10, prise en combinaison avec la revendication 9, caractérisée en ce que ladite partie annulaire (160) des moyens formant piston (140) est constituée par un bourrelet formé dans la paroi et sollicité vers la partie correspondante (162) du boîtier (110) par de seconds moyens élastiques (164).

12. Electrovanne selon la revendication 11, caractérisée en ce que la force exercée par les seconds moyens élastiques (164) est supérieure à la force exercée par les premiers moyens élastiques (154) et en ce que lesdits moyens élastiques (154, 164) agissent sur des parties de la paroi (140) radialement décalées de telle sorte que la partie de la paroi entourant le second passage (152) est susceptible de se déplacer axialement à l'encontre des premiers moyens élastiques (154) sans déplacer le bourrelet (160) à l'encontre des seconds moyens élastiques (164), lorsque les premiers moyens formant clapet (130) occupent leur seconde position.

**Claims**

1. Solenoid valve comprising a housing (10) having at least one inlet port (18) and at least one outlet port (16) which communicate by way of a passage in which are disposed poppet means (30) movable inside said housing (10) in response to operation of an electromagnetic device (20, 28) to open or close said passage and further comprising piston means (40) defining in said passage an inlet chamber (44) communicating with the inlet port (18) and an outlet chamber (46) communicating with the outlet port (16), said inlet chamber and outlet chamber communicating via a second passage (52) in said piston means (40) and via a valve seat (38) defined in said second passage (52), characterized in that said seat is normally urged into fluid tight engagement with said poppet means (30) by first resilient means (54) irrespective of the position occupied by the poppet means (30) and that the latter are adapted to move between a first position in which they urge piston means (40) against resilient means (54) on to abutment means (48) provided in said housing (10) so as to prevent any communication between inlet port (18) and outlet port (16), and a second position in which said piston means (40) are responsive to the difference in the pressures prevailing in said inlet chamber (44) and outlet chamber (46) so as to permit communication from inlet port (18) to outlet port (16) and prevent communication in the opposite direction.

2. Solenoid valve as claimed in claim 1, characterized in that the poppet means (30) are responsive to the pressure prevailing in the inlet port (18) to occupy the first position when the electromagnetic device (20, 28) is not operated.

3. Solenoid valve as claimed in claim 1 or 2, wherein the electromagnetic device comprises a fixed core (28) situated inside a coil (20), characterized in that the second position of the poppet means is defined by engaging of the fixed core by said poppet means.

4. Solenoid valve as claimed in claim 3, characterized in that said poppet means (30) comprises a substantially cylindrical armature, axially movable between said first and second positions inside a bore (24) provided in said housing (10), the fixed core (28) being also substantially cylindrical and mounted in said bore (24) between the inlet port (18) and the movable armature (30), at least one groove (32) being formed in the wall of the bore (24) to communicate the inlet port (18) with the inlet chamber (44).

5. Solenoid valve as claimed in claim 4, characterized in that the diameters of said armature (30) and of said core (28) are substantially equal, one at least (34) of their contacting ends being convex to define on said armature (30) a fluid pressure responsive surface area responsive to fluid pressure in said inlet port (18).

6. Solenoid valve as claimed in claim 3, 4 or 5, characterized in that energization of the coil (20) generates a first or a second electromagnetic force, according to whether the poppet means (30) are in the first or the second position, the first electromagnetic force plus the force exerted by the resilient means (54) being smaller than the force resulting from the pressure in the inlet port (18) exerting on the diaphragm and the poppet, whereas the second electromagnetic force plus the force exerted by the resilient means (54) is initially greater than the force resulting from the pressure in the inlet port (18) exerting on the diaphragm and the poppet.

7. Solenoid valve as claimed in one of the foregoing claims, characterized in that the outlet port (16) is substantially aligned with the second passage (52), and that the facing edges of said housing and of said piston means (40) surrounding the outlet port (16) and the second passage (52) respectively define a space of variable width controlling communication between the outlet port (16) and the outlet chamber (46), said space being closed to seal off the outlet chamber from the outlet port when the poppet means are in the first position.

8. Solenoid valve as claimed in one of the foregoing claims, characterized in that it comprises a second outlet port (156) capable of communicating with the inlet port (118) by way of a third passage (158), the piston means (140) comprising a second poppet means (160) capable of engaging in a fluid-tight manner a second valve seat (162) formed in the housing (110) when the first poppet means (130) are in the second position, so preventing communication between the inlet port (118) and the second outlet port (158), such communication being permitted when the first poppet means (130) are in the first position.

9. Solenoid valve as claimed in claim 8, characterized in that the second poppet member comprises an annular portion (160) formed on the piston means (140) and capable of engaging in a fluid-tight manner a corresponding portion (162) formed in the housing (110) so as to define the outer peripheral edge of the inlet chamber (144) and the inner peripheral edge of a second annular outlet chamber (158) surrounding the piston means (140) and communicating with the second outlet port.

10. Solenoid valve as claimed in one of the foregoing claims, characterized in that the piston means comprise a wall of flexible material (40) of which the outer peripheral edge (42) is associated with the housing (10) in a fluid-tight manner.

11. Solenoid valve as claimed in claims 9 and 10, characterized in that said annular portion (160) of said piston means (140) is made from a bead formed in the wall and urged towards the corresponding portion (162) of the casing (110) by means of second resilient means (164).

12. Solenoid valve as claimed in claim 11, characterized in that the force exerted by the second resilient means (164) is greater than the force exerted by the first resilient means (154), and the said resilient means (154, 164) act on radially offset portions of the wall (140), so that the wall portion surrounding the second passage (152) is axially movable contrary to the first resilient means (154) without moving the bead (160) contrary to the second resilient means (164), when the first poppet means (130) is in the second position.

### Patentansprüche

1. Magnetventil mit einem Gehäuse (10), welches zumindest eine Einlaßöffnung (18) und zumindest eine Auslaßöffnung (16) aufweist, die über einen Verbindungskanal in Verbindung stehen, in welchem ein Ventilkörper (30) angeordnet ist, der im Inneren des Gehäuses (10) durch Erregen eines Elektromagneten (20, 28) verlagerbar ist, um das Freigeben oder Verschließen des Verbindungskanales zu steuern, und mit einem einen Kolben bildenden Bauteil (40), durch welches in dem Verbindungskanal eine mit der Einlaßöffnung (18) in Verbindung stehende Einlaßkammer (44) und eine mit der Auslaßöffnung (16) in Verbindung stehende Auslaßkammer (46) begrenzt ist, welche Kammern über einen zweiten im Kolbenbauteil (40) ausgebildeten Kanal (52) und über einen in diesem zweiten Kanal (52) ausgebildeten Ventilsitz (38) in Verbindung stehen, dadurch gekennzeichnet, daß der Ventilsitz durch erste elastische Mittel (54) normalerweise in strömungsmitteldichte Anlage an den Ventilkörper (30) vorgespannt ist, gleich welche Stellung der Ventilkörper (30) einnimmt; und daß der Ventilkörper (30) eine erste Stellung, in welcher er das Kolbenbauteil (40) entgegen der Kraft der elastischen Mittel (54) gegen eine am Gehäuse (10) vorgesehene Anschlageinrichtung (48) drückt, so daß jegliche Verbindung zwischen der Einlaßöffnung (18) und der Auslaßöffnung (16) unterbrochen wird, und eine zweite Stellung einnehmen kann, in welcher das Kolbenbauteil (40) auf die in der Einlaßkammer (44) und der Auslaßkammer (46) herrschenden Drucke anspricht, um die Verbindung von der Einlaßöffnung (18) zur Auslaßöffnung (16) zu ermöglichen, die Verbindung in entgegengesetzter Richtung dagegen zu sperren.

2. Magnetventil nach Anspruch 1, dadurch gekennzeichnet, daß der Ventilkörper auf den in der Einlaßöffnung (18) herrschenden Druck anspricht, so daß er bei nicht-eingeschaltetem Elektromagneten (20, 28) seine erste Stellung einnimmt.

3. Magnetventil nach Anspruch 1 oder 2, bei dem der Elektromagnet einen im Inneren einer Wicklung (20) angeordneten feststehenden Kern (28) aufweist, dadurch gekennzeichnet, daß die zweite Stellung des Ventilkörpers (30) dadurch vorgegeben ist, daß letzterer in Anlage an den feststehenden Kern (28) kommt.

4. Magnetventil nach Anspruch 3, dadurch gekennzeichnet, daß der Ventilkörper (30) durch einen im wesentlichen zylindrischen Anker gebildet ist, der im Inneren einer im Gehäuse (10) ausgebildeten Bohrung (24) in axialer Richtung zwischen der ersten und der zweiten Stellung verlagerbar ist, daß der feststehende Kern ebenfalls im wesentlichen zylindrische Gestalt hat und in der genannten Bohrung (24) zwischen der Einlaßöffnung (18) und dem bewegbaren Anker (30) angeordnet ist; und daß in der Wand der Bohrung (24) zumindest eine Nut (32) vorgesehen ist, über welche die Einlaßöffnung (18) mit der Einlaßkammer (44) in Verbindung steht.

5. Magnetventil nach Anspruch 4, dadurch gekennzeichnet, daß der Anker (30) und der Kern (28) im wesentlichen denselben Durchmesser aufweisen und daß zumindest eines (34) ihrer in Berührung stehenden Enden gewölbt ist, so daß man auf dem Anker (30) eine Oberfläche erhält, die mit dem in der Einlaßöffnung (18) herrschenden Druck beaufschlagt ist.

6. Magnetventil nach einem der Ansprüche 3 bis 5, dadurch gekennzeichnet, daß durch Erregen der Wicklung (20) eine erste oder eine zweite elektromagnetische Kraft erzeugt wird, je nachdem, ob der Ventilkörper (30) in der ersten oder der zweiten Stellung steht, wobei die erste elektromagnetische Kraft und die von den elastischen Mitteln (54) erzeugte Kraft zusammengenommen kleiner sind als diejenige Kraft, die durch Beaufschlagung der Membran und des Ventilkörpers mit dem in der Einlaßöffnung (18) anstehenden Druck erhalten wird, während die zweite elektromagnetische Kraft zusammen mit der von den elastischen Mitteln (54) bereitgestellten Kraft zu Anfang größer ist als die Kraft, welche man durch Beaufschlagung der Membran und des Ventilkörpers mit dem in der Einlaßöffnung (18) anstehenden Druck erhält.

7. Magnetventil nach einem der vorstehenden Ansprüche, dadurch gekennzeichnet, daß die Auslaßöffnung (16) im wesentlichen mit dem zweiten Kanal (52) fluchtet und daß einander gegenüberliegende Kragen des Gehäuses und des Kolbenbauteiles (40), welche die Auslaßöffnung (16) bzw. den zweiten Kanal (52) umgeben, einen Raum variabler Breite begrenzen, durch welchen die Strömungsmittelverbindung zwischen der Auslaßöffnung (16) und der Auslaßkammer (46) gesteuert wird, wobei dieser Raum geschlossen ist, um die Auslaßöffnung strömungsmitteldicht von der Auslaßkammer zu trennen, wenn der Ventilkörper in seiner ersten Stellung steht.

8. Magnetventil nach einem der vorhergehenden Ausprüche, dadurch gekennzeichnet, daß eine zweite Auslaßöffnung (156) über einen dritten Kanal (158) mit der Einlaßöffnung (118) verbindbar ist und daß das Kolbenbauteil (140) einen zweiten Ventilkörper (160) trägt, der strömungsmitteldicht auf einen auf dem Gehäuse (110) ausgebildeten zweiten Ventilsitz (162) aufsetzbar ist, wenn der erste Ventilkörper (130) seine zweite Stellung

einnimmt, wodurch die Verbindung zwischen der Einlaßöffnung und der zweiten Auslaßöffnung (158) unterbrochen wird, während diese Verbindung dann freigegeben wird, wenn der erste Ventilkörper (130) seine erste Stellung einnimmt.

9. Magnetventil nach Anspruch 8, dadurch gekennzeichnet, daß der zweite Ventilkörper durch einen ringförmigen Abschnitt (160) auf dem Kolbenbauteil (140) gebildet ist und strömungsmitteldicht an einen entsprechenden Abschnitt (162) des Gehäuses (110) anlegbar ist, so daß er den außenliegenden Umfangsrand der Einlaßkammer (144) und den innenliegenden Umfangsrand einer zweiten, ringförmigen Auslaßkammer (158) begrenzt, welche das Kolbenbauteil (140) umgibt und mit der zweiten Auslaßöffnung in Verbindung steht.

10. Magnetventil nach einem der vorhergehenden Ansprüche, dadurch gekennzeichnet, daß das Kolbenbauteil eine Wand (40) aus biegsamen Material aufweist, dessen äußerer Umfangsrand (42) mit dem Gehäuse (10) dicht verbunden ist.

11. Magnetventil nach Anspruch 10 in Verbindung mit Anspruch 9, dadurch gekennzeichnet, daß der ringförmige Abschnitt (160) des Kolbenbauteils (140) von einem Wulst gebildet wird, der in der Wand (40) gebildet ist und durch zweite elastische Mittel (164) gegen den entsprechenden Abschnitt (162) des Gehäuses (10) vorgespannt ist.

12. Magnetventil nach Anspruch 11, dadurch gekennzeichnet, daß die von den zweiten elastischen Mitteln (164) ausgeübte Kraft größer als die von den ersten elastischen Mitteln (154) ausgeübte Kraft ist und daß die elastischen Mittel (154, 164) auf Abschnitte der Wand (140) wirken, die radial so versetzt sind, daß der den zweiten Kanal (152) umgebende Abschnitt der Wand (140) axial entgegen den elastischen Mitteln (154) verschiebbar ist, ohne den Wulst (160) entgegen den zweiten elastischen Mitteln (164) zu verschieben, während der zweite Ventilkörper (130) die zweite Stellung einnimmt.

0 001 195

Fig. 1

Fig. 2

1

Fig.3